# FASCICULE DE BREVET EUROPEEN

(11) **EP 3 033 254 B1**
(45) Date de publication et mention de la délivrance du brevet: **02.08.2017**
(21) Numéro de dépôt: 14748234.3
(22) Date de dépôt: 20.06.2014
(51) Int. Cl.: B60T 13/52, B60K 6/485, B60W 10/08

(54) **VEHICULE AUTOMOBILE COMPRENANT DES MOYENS ELECTRIQUES DE PRODUCTION DE VIDE**
KRAFTFAHRZEUG MIT ELEKTRISCHEN MITTELN ZUR HERSTELLUNG EINES VAKUUMS
AUTOMOTIVE VEHICLE COMPRISING ELECTRIC MEANS FOR PRODUCING A VACUUM

(30) Priorité: 13.08.2013 FR 1357985
(43) Date de publication de la demande: 22.06.2016
(73) Titulaire: Technoboost, 75116 Paris (FR)
(72) Inventeur: HABBANI, Ridouane, F-92110 Clichy (FR)
(74) Mandataire: Rosenberg, Muriel Sylvie
(86) Numéro de dépôt international: PCT/FR2014/051541
(87) Numéro de publication internationale: WO 2015/022457

(56) Documents cités:
- EP-A2- 1 036 694
- DE-A1-102006 004 288
- US-A1- 2002 028 726

## Description

Le domaine de l'invention concerne un véhicule automobile comprenant un dispositif de freinage à dépression.

Un dispositif de freinage à dépression est utilisé sur les véhicules automobiles pour accroitre la force de freinage exercée par le conducteur. Il permet ainsi de réduire l'effort du conducteur sur le circuit hydraulique pour ralentir le véhicule.

Un dispositif de freinage à dépression comprend une chambre à dépression reliée au collecteur d'admission du moteur thermique. La force de freinage amplifiée est produite grâce au fonctionnement tournant en régime du moteur thermique. Le papillon du collecteur d'admission est fermé empêchant ainsi l'entrée d'air atmosphérique dans le collecteur. L'air de la chambre à dépression du dispositif de freinage est pompé par le fonctionnement tournant du moteur et est fourni au moyen d'un accès entre le collecteur et la chambre à dépression du dispositif de freinage. Cet accès d'air permet de produire du vide dans la chambre à dépression lors du fonctionnement tournant du moteur et d'amplifier la force de freinage. Un tel dispositif est par exemple décrit dans la demande de brevet français FR2855483. Bien que cette solution présente l'avantage de s'affranchir d'une pompe à vide dédiée au dispositif de freinage, cette configuration est énergivore en carburant, en particulier à l'arrêt du véhicule.

US 2002/028726 A1 révèle un dispositif de freinage à dépression connu.

On connaît une autre solution de production de vide au moyen d'une pompe à vide couplée au dispositif de freinage, en particulier lorsque le moteur est arrêté. La pompe à vide peut être autonome et alimentée électriquement. Cependant, une telle pompe à vide présente des performances inférieures et ne permet pas un freinage satisfaisant d'un point de vue de la sécurité dans toutes les situations de roulage. On connaît la demande de brevet français FR2981901 décrivant un véhicule disposant de deux générateurs de dépression.

L'inconvénient d'un tel système pour les véhicules est l'augmentation du coût de la solution de production de vide, en particulier le nombre de pompes à vide ainsi que les moyens de contrôle des générateurs de dépression.

Pour réduire ce coût, on connaît une solution de production de vide comprenant une pompe à vide pouvant être entrainée par le moteur thermique ou directement par la transmission du groupe motopropulseur. La demanderesse a déposé par le passé la demande de brevet FR2977549 décrivant un tel système de freinage. Ce système permet de s'affranchir du fonctionnement du moteur tournant mais nécessite néanmoins l'utilisation d'une pompe à vide pour les phases de faibles vitesses et d'arrêt du véhicule.

Il réside donc un besoin de proposer une solution de production de vide alternative pour les véhicules automobiles moins consommatrice en carburant, moins onéreuse et satisfaisante pour toutes les phases de roulage du véhicule.

Plus précisément, l'invention concerne un véhicule automobile comprenant un moteur thermique, un dispositif de freinage à dépression dont une chambre à dépression est reliée à un collecteur d'admission du moteur thermique permettant la production de vide dans la chambre à dépression en fonctionnement tournant du moteur, une source d'énergie électrique, une machine électrique actionnée par la source d'énergie et une transmission mécanique entre la machine électrique et le moteur thermique.

Selon l'invention, la source d'énergie, la machine électrique et la transmission sont configurées pour entrainer le moteur thermique en fonctionnement tournant à partir de l'énergie électrique de sorte à produire du vide dans la chambre à dépression.

Selon une variante, la machine électrique est un alterno-démarreur.

Selon une variante, la source d'énergie électrique est un accumulateur d'énergie électrique.

Selon une variante, la transmission mécanique est une courroie.

Selon une variante, le moteur thermique est piloté en régime moteur sans injection de carburant durant la production de vide à partir de l'énergie électrique.

Selon une variante, le véhicule ne comprend pas de pompe à vide pour la production de vide dans la chambre à dépression.

Il est prévu aussi un procédé de production de vide mis en oeuvre par un système de commande de véhicule comprenant l'une quelconque des caractéristiques précédentes.

Selon l'invention, le procédé comprend les étapes successives suivantes :
- requête de production de vide,
- pilotage de la source d'énergie électrique, la machine électrique et la transmission pour entrainer le moteur thermique en fonctionnement tournant à partir de l'énergie électrique de sorte à produire du vide dans la chambre à dépression.

Selon une variante, le procédé comprend une étape d'actionnement de la machine électrique par un accumulateur d'énergie électrique.

De préférence, durant la production du vide dans la chambre à dépression, le moteur thermique ne reçoit pas de requête de consigne de couple aux roues.

Il est prévu aussi selon l'invention un programme informatique comportant des instructions lisibles par un dispositif de calcul, comportant un processeur lié à une mémoire programmable, pour commander un système de commande d'un groupe motopropulseur de véhicule automobile et appliquer un procédé de production de vide selon l'invention.

Grâce à l'invention, la production de vide dans un véhicule automobile est rendue possible sans l'intervention d'une pompe à vide. Il permet ainsi d'économiser le coût de la pompe à vide.

Par ailleurs, le procédé de production de vide dans la chambre à dépression du système de frein permet d'utiliser l'énergie électrique à disposition dans le véhicule au moyen de la transmission mécanique permettant d'entrainer le moteur thermique à partir de la machine électrique, en particulier l'alterno-démarreur. Ainsi, il n'est pas nécessaire d'injecter du carburant lors du fonctionnement du moteur thermique pour la production de vide.

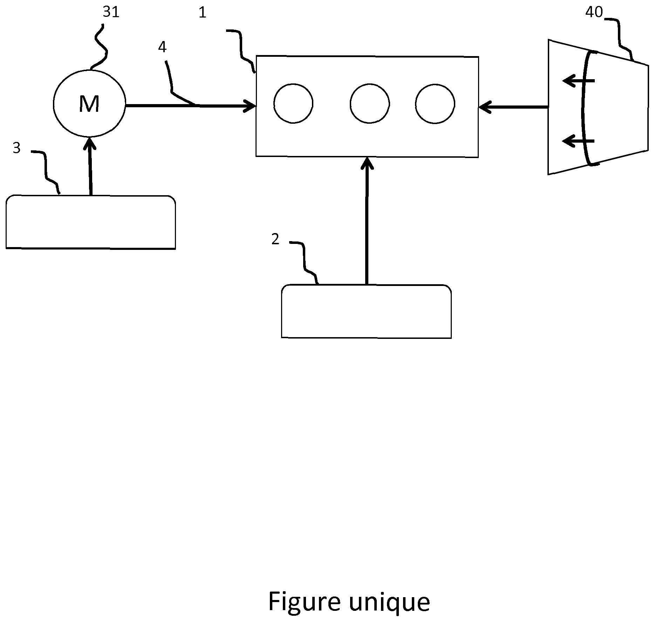

D'autres caractéristiques et avantages de la présente invention apparaîtront plus clairement à la lecture de la description détaillée qui suit de modes de réalisation de l'invention donnés à titre d'exemples nullement limitatifs et illustrés par la figure unique représentant un véhicule automobile comprenant un dispositif de freinage assisté et les moyens électriques de production de vide.

L'invention concerne les véhicules automobiles comprenant un alterno-démarreur couplé au moteur thermique 1. Le procédé de production de vide exploite l'alterno-démarreur du groupe motopropulseur pour réaliser la dépression nécessaire au dispositif de freinage.

La figure est un schéma simplifié de l'architecture d'un groupe motopropulseur d'un véhicule automobile comprenant un moteur thermique 1 couplé à une réserve de carburant 2. Le groupe motopropulseur comprend également un accumulateur d'énergie électrique 3 pouvant actionner électriquement une machine électrique 31. Il comprend de plus une transmission mécanique 4 entre la machine électrique 31 et le moteur thermique 1 et un dispositif de freinage à dépression 40.

Dans ce mode de réalisation, le moteur thermique 1 est un moteur à essence alimenté par une réserve de carburant 2. Le moteur thermique 1 est commandé par un superviseur du groupe motopropulseur du véhicule. Le superviseur élabore les requêtes de commande du moteur thermique 1, notamment les requêtes de démarrage et arrêt du moteur et les requêtes des composants du moteur. De plus, le superviseur élabore les requêtes de consigne de couple aux roues et de consigne de régime moteur.

Le moteur thermique 1 est configuré de sorte à pouvoir opérer une dépression dans une chambre à dépression du dispositif de freinage 40. Pour cela, le collecteur d'admission d'air est relié à la chambre à dépression du dispositif de freinage 40. Lorsque le papillon du moteur thermique 1 est fermé, ou partiellement fermé, un accès d'air peut être ouvert entre la chambre à dépression du dispositif de freinage 40 et le collecteur d'admission d'air du moteur. Ainsi, lorsque le moteur thermique est piloté en régime et est alimenté en carburant pour fournir du couple et du régime une dépression est réalisée dans le dispositif de freinage.

Le superviseur du groupe motopropulseur commande l'opération de cette dépression lorsque par exemple le conducteur du véhicule exerce un freinage. Lorsqu'une requête de production de vide est activée, le superviseur transmet et coordonne les requêtes de commande appropriées au moteur thermique 1 et au dispositif de freinage 40 pour réaliser la dépression adéquate.

Ainsi, le véhicule automobile comprend un premier moyen de production de vide dont la dépression est générée à partir de la source d'énergie de carburant 2 permettant de mettre en fonctionnement tournant le moteur thermique 1. Lorsqu'une dépression est nécessaire, le superviseur peut commander la mise en fonctionnement tournant du moteur thermique 1 grâce au carburant et d'opérer la commande du moteur thermique 1 et du dispositif de freinage 40 pour permettre la production de vide dans la chambre à dépression. Dans cette première configuration de production de vide seul le carburant est utilisé pour mettre le moteur en fonctionnement tournant. Il s'agit généralement d'un mode de fonctionnement au ralenti dans lequel le papillon du moteur thermique 1 est partiellement fermé.

De plus, le véhicule comprend la machine électrique 3 qui est un alterno-démarreur utilisé dans le cadre de l'invention pour la production de vide dans le dispositif de freinage 40. La transmission mécanique 4 est une courroie reliée au vilebrequin du moteur thermique 1. L'alterno-démarreur 31 peut être commandé pour recharger l'accumulateur 3 dans un premier mode de fonctionnement, et de mettre en fonctionnement tournant le moteur thermique 1 dans un autre mode de fonctionnement, en particulier lorsque celui-ci est à l'arrêt pour un processus de démarrage rapide. Un alterno-démarreur est généralement utilisé pour redémarrer rapidement le moteur thermique suite à un arrêt temporaire. Ce dispositif permet de réduire considérablement la consommation de carburant en cycle urbain en bénéficiant des nombreuses phases d'arrêt du véhicule pour arrêter le moteur thermique 1.

En variante, la source d'énergie 3 est un dispositif d'alimentation électrique, la machine électrique 31 est un moteur électrique et la transmission mécanique 4 est un embrayage, un crabot ou un répartiteur de puissance.

Le superviseur du groupe motopropulseur peut commander la machine électrique 31 actionnée par l'accumulateur 3 pour entrainer le moteur thermique 1 à partir de l'énergie électrique de l'accumulateur. Ainsi, le véhicule automobile comprend un deuxième moyen de production de vide dont la dépression est générée à partir de l'énergie électrique. Lorsqu'une dépression est nécessaire, le superviseur peut commander la mise en fonctionnement tournant du moteur thermique 1 grâce à l'énergie électrique et opérer la commande du moteur thermique 1 et du dispositif de freinage 40 pour permettre la production de vide dans la chambre à dépression. Dans cette configuration de production de vide l'énergie de la réserve électrique est utilisée pour mettre le moteur en fonctionnement tournant avec un régime moteur assurant le pompage de l'air de la chambre à dépression. Le moteur thermique fournit un régime moteur durant une durée suffisante pour produire du vide et ne reçoit pas de requête de démarrage suivant la requête de production de vide. Avantageusement, le moteur est piloté sans injection de carburant pour sa mise en fonctionnement. Dans ce mode de fonctionnement, le moteur thermique ne fournit pas de couple moteur.

L'avantage de l'invention est de permettre l'entrainement du moteur thermique 1 à partir d'une source d'énergie autre que le carburant à disposition dans le véhicule. Ainsi le moteur thermique est mis en fonctionnement tournant dans un mode de consommation nulle en carburant.

Le véhicule comprend donc deux sources d'énergie pour mettre le moteur thermique en fonctionnement tournant et produire du vide dans le dispositif de freinage à dépression. Le superviseur peut commander chaque source d'énergie en coordination avec le moteur thermique et le dispositif de freinage pour produire du vide dans des situations de roulage spécifiques à chaque source d'énergie.

Le procédé de production de vide s'opère selon les étapes suivantes. Dans une première étape, le véhicule n'est pas dans une situation de besoin de production de vide. Lorsqu'une requête de production de vide est active dans les conditions de roulage propices à l'utilisation de la machine électrique 31, alors à une étape suivante le superviseur du groupe motopropulseur commande le pilotage de la machine électrique 31 pour entrainer le moteur thermique 1 en fonctionnement tournant à partir de l'énergie électrique de l'accumulateur 3 de sorte à produire du vide dans la chambre à dépression.

Une condition de roulage correspond à une situation de roulage avec une vitesse non nulle et en phase d'accélération supérieure à zéro ou nulle. Si le niveau d'énergie de la réserve d'énergie 3 est supérieur à un niveau d'énergie prédéterminé, alors le superviseur déclenche la production de vide à partir de l'énergie emmagasinée dans la réserve d'énergie 3. Le superviseur, dans le cadre du procédé de production de vide, transmet une commande à destination de la batterie électrique 3 et de la machine électrique 31 pour entrainer le moteur thermique 1 de sorte à produire du vide dans la chambre à dépression du dispositif de freinage 40. Si cette condition n'est pas respectée, le superviseur commande la production de vide à partir du carburant 2.

Si la condition de roulage n'est pas détectée et qu'aucune autre condition de roulage pour déclencher la production de vide à partir d'une source d'énergie autre que le carburant n'est détectée, alors la production de vide est opérée à partir du moteur thermique 1 entrainée uniquement par le carburant.

Lorsque la réserve d'énergie 3 n'est pas à disposition pour la production de vide, par exemple si le niveau d'énergie le niveau de l'accumulateur 3 n'est pas à un niveau de remplissage suffisant, et que le moteur thermique 1 est en fonctionnement tournant pour transmettre du couple aux roues alors le superviseur peut transmettre une commande du moteur thermique pour produire du vide au détriment de l'agrément de conduite. Si l'agrément de conduite est privilégié au procédé de production de vide, par mesure de sécurité un deuxième dispositif de freinage est alors utilisé pour opérer une phase de freinage.

Les fonctions de calcul et de commande du groupe motopropulseur pour la mise en oeuvre des étapes du procédé de production de vide sont exécutées par un programme informatique mémorisé dans un circuit intégré à mémoire programmable du groupe motopropulseur, mémoire réinscriptible ou non effaçable. Il s'agit généralement du superviseur du groupe motopropulseur comprenant un dispositif de calcul à microprocesseur associé à une mémoire programmable.

## Revendications

1. Véhicule automobile comprenant un moteur thermique (1), un dispositif de freinage à dépression (40) dont une chambre à dépression est reliée à un collecteur d'admission du moteur thermique permettant la production de vide dans la chambre à dépression en fonctionnement tournant du moteur, une source d'énergie électrique (3), une machine électrique (31) actionnée par la source d'énergie et une transmission mécanique (4) entre la machine électrique et le moteur thermique, **caractérisé en ce que** la source d'énergie, la machine électrique et la transmission sont configurées pour entrainer le moteur thermique en fonctionnement tournant à partir de l'énergie électrique de sorte à produire du vide dans la chambre à dépression et **en ce que** le moteur thermique (1) est piloté en régime moteur sans injection de carburant durant la production de vide à partir de l'énergie électrique.

2. Véhicule selon la revendication 1, **caractérisé en ce que** la machine électrique est un alterno-démarreur (31).

3. Véhicule selon l'une quelconque des revendications précédentes, **caractérisé en ce que** la source d'énergie électrique est un accumulateur d'énergie électrique (3).

4. Véhicule selon l'une quelconque des revendications précédentes, **caractérisé en ce que** la transmission mécanique (4) est une courroie.

5. Véhicule selon l'une quelconque des revendications précédentes, **caractérisé en ce qu'**il ne comprend pas de pompe à vide pour la production de vide dans la chambre à dépression.

6. Procédé de production de vide mis en oeuvre par un système de commande de véhicule selon l'une quelconque des revendications précédentes, **caractérisé en ce qu'**il comprend les étapes successives suivantes :
- requête de production de vide,
- pilotage de la source d'énergie électrique (3), la machine électrique et la transmission (4) pour entrainer le moteur thermique (1) en fonctionnement tournant à partir de l'énergie électrique de sorte à produire du vide dans la chambre à dépression.

7. Procédé selon la revendication 6, **caractérisé en ce qu'**il comprend une étape d'actionnement de la machine électrique (31) par un accumulateur d'énergie électrique (3).

8. Procédé selon l'une quelconque des revendications 6 à 7, **caractérisé en ce que** durant la production du vide dans la chambre à dépression, le moteur thermique ne reçoit pas de requête de consigne de couple aux roues.

9. Programme informatique comportant des instructions lisibles par un dispositif de calcul, comportant un processeur lié à une mémoire programmable, pour commander un système de commande d'un groupe motopropulseur de véhicule automobile et appliquer le procédé de production de vide selon l'une quelconque des revendications 6 à 8.

## Patentansprüche

1. Kraftfahrzeug, das eine Brennkraftmaschine (1), eine Unterdruckbremsvorrichtung (40), von der eine Unterdruckkammer mit einem Ansaugrohr der Brennkraftmaschine verbunden ist, der das Erzeugen von Vakuum in der Unterdruckkammer beim Drehbetrieb der Maschine ermöglicht, eine Quelle (3) elektrischer Energie, eine elektrische Maschine (31), die von der Energiequelle betätigt wird, und ein mechanisches Getriebe (4) zwischen der elektrischen Maschine und der Brennkraftmaschine umfasst, **dadurch gekennzeichnet, dass** die Energiequelle, die elektrische Maschine und das Getriebe ausgelegt sind, um die Brennkraftmaschine in Drehbetrieb ausgehend von der elektrischen Energie derart anzutreiben, dass in der Unterdruckkammer Vakuum erzeugt wird, und dass die Brennkraftmaschine (1) ohne Einspritzen von Kraftstoff während der Vakuumerzeugung ausgehend von der elektrischen Energie drehzahlgesteuert wird.

2. Fahrzeug nach Anspruch 1, **dadurch gekennzeichnet, dass** die elektrische Maschine ein Starter-Generator (31) ist.

3. Fahrzeug nach einem der vorhergehenden Ansprüche, **dadurch gekennzeichnet, dass** die Quelle elektrischer Energie ein Speicher elektrischer Energie (3) ist.

4. Fahrzeug nach einem der vorhergehenden Ansprüche, **dadurch gekennzeichnet, dass** das mechanische Getriebe (4) eine Riemen ist.

5. Fahrzeug nach einem der vorhergehenden Ansprüche, **dadurch gekennzeichnet, dass** es keine Vakuumpumpe zur Vakuumerzeugung in der Unterdruckkammer umfasst.

6. Verfahren zur Vakuumerzeugung, das von einem Fahrzeugsteuersystem nach einem der vorhergehenden Ansprüche umgesetzt wird, **dadurch gekennzeichnet, dass** es die folgenden Schritte umfasst:
- Vakuumerzeugungsanfrage,
- Steuern der Quelle elektrischer Energie (3), der elektrischen Maschine und des Getriebes (4), um die Brennkraftmaschine (1) in Drehbetrieb ausgehend von der elektrischen Energie derart anzutreiben, dass Vakuum in der Unterdruckkammer erzeugt wird.

7. Verfahren nach Anspruch 6, **dadurch gekennzeichnet, dass** es einen Schritt des Betätigens der elektrischen Maschine (31) durch einen Speicher elektrischer Energie (3) umfasst.

8. Verfahren nach einem der Ansprüche 6 bis 7, **dadurch gekennzeichnet, dass** die Brennkraftmaschine während der Produktion des Vakuums in der Unterdruckkammer keine Drehmomentsollwertanfrage an den Rädern empfängt.

9. Computerprogramm, das Anweisungen umfasst, die von einer Rechenvorrichtung gelesen werden können, die einen Prozessor umfasst, der mit einem programmierbaren Speicher verbunden ist, um ein Steuersystem eines Kraftfahrzeug-Antriebsaggregats zu steuern und das Vakuumerzeugungsverfahren nach einem der Ansprüche 6 bis 8 anzuwenden.

## Claims

1. A motor vehicle comprising a heat engine (1), a vacuum brake device (40), a vacuum chamber of which is connected to an intake manifold of the heat engine, permitting the production of a vacuum in the vacuum chamber in the running operation of the engine, a source of electrical energy (3), an electric machine (31) actuated by the energy source and a mechanical transmission (4) between the electric machine and the heat engine, **characterized in that** the energy source, the electric machine and the transmission are configured to drive the heat engine in running operation from the electrical energy so as to produce a vacuum in the vacuum chamber, and **in that** the heat engine (1) is driven at engine speed without fuel injection during the production of a vacuum from the electrical energy.

2. The vehicle according to Claim 1, **characterized in that** the electric machine is an alternator-starter (31).

3. The vehicle according to any one of the preceding claims, **characterized in that** the source of electrical energy is an accumulator of electrical energy (3).

4. The vehicle according to any one of the preceding claims, **characterized in that** the mechanical transmission (4) is a belt.

5. The vehicle according to any one of the preceding claims, **characterized in that** it does not include a vacuum pump for the production of a vacuum in the vacuum chamber.

6. A method for producing a vacuum, implemented by a vehicle operation system according to any one of the preceding claims, **characterized in that** it includes the following successive steps:
- request for production of a vacuum,
- controlling of the source of electrical energy (3), the electric machine and the transmission (4) for driving the heat engine (1) in running operation from the electrical energy so as to produce a vacuum in the vacuum chamber.

7. The method according to Claim 6, **characterized in that** it includes an actuating step of the electric machine (31) by an accumulator of electrical energy (3).

8. The method according to any one of Claims 6 to 7, **characterized in that** during the production of the vacuum in the vacuum chamber, the heat engine does not receive any torque setpoint request to the wheels.

9. A computer program comprising instructions readable by a computing device, comprising a processor linked to a programmable memory, for controlling a control system of a power train of a motor vehicle and for applying the method for producing a vacuum according to any one of Claims 6 to 8.
